# FASCICULE DE BREVET EUROPEEN

(11) **EP 0 834 412 B1**
(45) Date de publication et mention de la délivrance du brevet: **27.11.2002**
(21) Numéro de dépôt: 97402283.2
(22) Date de dépôt: 30.09.1997
(51) Int. Cl.: B60H 1/00, H01H 19/02

(54) **Dispositif de communication multifonctions pour tableau de commande d'une installation, notamment de véhicule automobile**
Multifunktional-Verbindungsvorrichtung für Armaturenbrett, insbesondere in einem Kraftfahrzeug
Multifunctional communication device for instrument panel particularly in a motor vehicle

(30) Priorité: 01.10.1996 FR 9611951
(43) Date de publication de la demande: 08.04.1998
(73) Titulaire: VALEO CLIMATISATION, 78321 La Verrière (FR)
(72) Inventeur: Valier, Marco, 10025 Pino Torinese (Torino) (IT)

(56) Documents cités:
- DE-U- 9 113 196
- FR-A- 2 444 331
- GB-A- 1 469 235
- US-A- 5 204 502
- US-A- 5 420 387
- US-A- 5 464 955

## Description

L'invention concerne le domaine des tableaux de commande d'installation, comme par exemple les installations de chauffage, ventilation et/ou climatisation de véhicule automobile.

Elle concerne plus particulièrement les dispositifs de commutation, implantés dans les tableaux de commande, et comprenant au moins un organe de commande qui peut être manipulé par un utilisateur de façon à sélectionner un état de fonctionnement prédéfini, parmi une pluralité d'états, d'un composant de l'installation.

De tels tableaux de commande comportent généralement de nombreux dispositifs de commutation, mécanique(s) et/ou électrique(s), disposés les uns à côté des autres. L'encombrement interne de ces tableaux de commande est par conséquent important, ce qui rend leur réalisation difficile.

Par ailleurs, ces tableaux de commande comportent sur une façade, à proximité des organe de commande, dès zones munies éventuellement de marquages symbolisant la fonction de l'organe de commande voisin, et les réglages qu'il autorise. Or, pour permettre dans des conditions de faible visibilité, comme par exemple la nuit ou lors d'une traversée de tunnel, le repérage de ces marquage et la manipulation des organes de commande associés, on utilise des sources de lumière qui sont logées dans le tableau de commande. Cela contribue à augmenter encore l'encombrement interne du tableau de commande.

En outre, dans la mesure où certains au moins des organes de commande ainsi que les sources de lumière font partie du circuit électrique de l'installation, ils doivent être connectés aux moyens de commande de l'installation ainsi qu'entre eux, pour certains. Cela nécessite des câblages électriques et/ou des circuits imprimés et/ou intégrés dont le prix de revient est élevé, et qui ne permettent pas une réelle standardisation.
Le document US 5,204,502 divulgue un dispositif de commutation comprenant un bouton de commande et un support muni d'un connecteur électrique. Le connecteur électrique se raccorde à un connecteur externe qui supporte une lampe. Cette lampe éclaire le centre du bouton de commande.
Ce dispositif est compliqué. De plus, il n'inclue pas un ensemble de fonctions dans un boîtier unique.

En conséquence, un but de l'invention est de procurer un dispositif de commutation pour tableau de commande, standardisable et de faible encombrement.

L'invention propose à cet effet un dispositif de commutation du type décrit en introduction, dans lequel on prévoit un support que l'on solidarise au tableau de commande et qui comporte des moyens pour maintenir l'organe de commande, lequel peut être de type à déplacement rotatif ou linéaire, des moyens pour supporter au moins une source de lumière prévue pour l'éclairement d'une zone choisie d'une face arrière d'une paroi-façade du tableau de commande, et un premier emplacement pour loger au moins partiellement des moyens de raccordement électrique aux moyens de commande de chaque source de lumière.

Il en résulte que l'on procure ainsi des éléments modulaires de commutation multifonctions qui comprennent au moins un organe de commande électrique ou mécanique, au moins une source de lumière, et leurs moyens de raccordement aux moyens de commande de l'installation. Cela contribue à réduire notablement l'encombrement à l'intérieur du tableau de commande, à simplifier l'agencement interne de ce tableau de commande, et à autoriser une standardisation des dispositifs de commutation.

Selon une autre caractéristique de l'invention, le support comporte sur une face dite "inférieure" du support un second emplacement pour loger un connecteur que comprennent les moyens de raccordement. Ce connecteur est destiné à coopérer avec un connecteur complémentaire que comportent les moyens de commande, lesquels sont de préférence logés dans le tableau de commande. De la sorte, lors de l'assemblage du tableau de commande, il n'y a qu'à faire coopérer les deux connecteurs pour établir les connexions électriques.

Avantageusement, le support et le tableau de commande comprennent chacun des moyens de fixation qui coopèrent ensemble pour permettre l'immobilisation du support dans le tableau de commande.

Préférentiellement, l'organe de commande comprend un arbre maintenu par les moyens de maintien du support et un actionneur (ou bouton) solidaire de l'arbre et faisant saillie sur une face avant de la paroi-façade du tableau de commande. Cela permet à un utilisateur de déplacer l'arbre relativement au support pour définir l'état de fonctionnement en cours du composant de l'installation.

Selon un autre aspect de l'invention, le premier emplacement du support peut loger des moyens de réglage destinés à définir la multiplicité d'états de fonctionnement prédéfinis du composant de l'installation, lorsqu'ils sont placés par l'organe de commande dans une pluralité d'états prédéfinis. Ces moyens de réglage peuvent être réalisés, par exemple, sous la forme d'un potentiomètre ou de pistes conductrices destinées à coopérer avec un "frotteur" porté par l'arbre de l'organe de commande. Cela permet de réduire encore plus l'encombrement interne du tableau de commande.

Dans une application particulière, l'organe de commande peut définir les réglages d'un moteur électrique d'un ventilateur d'une installation de chauffage, ventilation et/ou climatisation de véhicule automobile. Dans ce cas, les moyens de réglage permettent de faire varier le régime du moteur.

Selon une autre caractéristique de l'invention, l'organe de commande peut également permettre le placement d'un autre composant de l'installation dans au moins deux états de fonctionnement prédéfinis. On réalise ainsi un dispositif de commutation capable de gérer deux composants d'une même installation. Par exemple, lorsque l'installation comprend une boucle de réfrigération, le second composant peut être un compresseur.

Selon encore un autre aspect de l'invention, le premier emplacement du support peut loger des moyens de commutation destinés à définir les deux états de fonctionnement prédéfinis de l'autre composant de l'installation, lorsqu'ils sont placés par l'organe de commande dans deux états prédéfinis. Ces moyens de commutation peuvent être par exemple réalisés sous la forme d'un interrupteur gérant l'alimentation d'un compresseur.

Lorsque l'organe de commande comporte un arbre, le déplacement axial de celui-ci entre au moins de première et seconde positions peut permettre de placer les moyens de commutation dans l'un de leurs états prédéfinis, lesquels sont associés respectivement auxdits au moins deux états de fonctionnement prédéfinis de l'autre composant. Ainsi, le déplacement rotatif ou linéaire de l'organe de commande assure le réglage d'un premier composant, tandis que le déplacement axial de cet organe de commande assure le réglage (ou la mise en, ou hors, fonctionnement) d'un second composant.

Préférentiellement, le support comprend au moins deux parties qui communiquent. Une première partie comporte les moyens de maintien de l'organe de commande, et au moins une seconde partie prolonge la première partie et comporte les moyens de support de la source de lumière. Ces première et seconde parties délimitent ensemble au moins le premier emplacement.

Bien entendu, on peut prévoir plusieurs secondes parties pour supporter plusieurs sources de lumière. Dans ce cas, les secondes parties prolongent respectivement la première partie dans des directions différentes de façon à permettre l'éclairement de plusieurs zones choisies, distinctes, de la face arrière de la paroi-façade du tableau de commande.

De même, on peut envisager qu'une première partie comprennent plusieurs moyens de maintien de plusieurs organe de commande.

Selon une autre caractéristique de l'invention, les première et seconde(s) parties du support sont de préférence réalisées en un unique boîtier moulé qui délimite dans une partie interne creuse ledit logement. De la sorte, les moyens de raccordement et/ou les moyens de commutation et/ou les moyens de réglage et/ou d'autres modules peuvent être isolés et protégés.

Préférentiellement, le boîtier est réalisé dans une-matière plastique, et si possible en deux parties supérieure et inférieure qui sont assemblées l'une à l'autre de façon à délimiter le logement.

Dans la description qui suit, faite à titre d'exemple, on se réfère aux dessins, sur lesquels :
- la figure 1 illustre schématiquement un mode de réalisation d'un dispositif de commutation selon l'invention, installé dans un tableau de commande d'une installation; et
- les figures 2A et 2B illustrent schématiquement le dispositif de commutation de la figure 1, respectivement dans des vues en perspective des faces supérieure et inférieure.

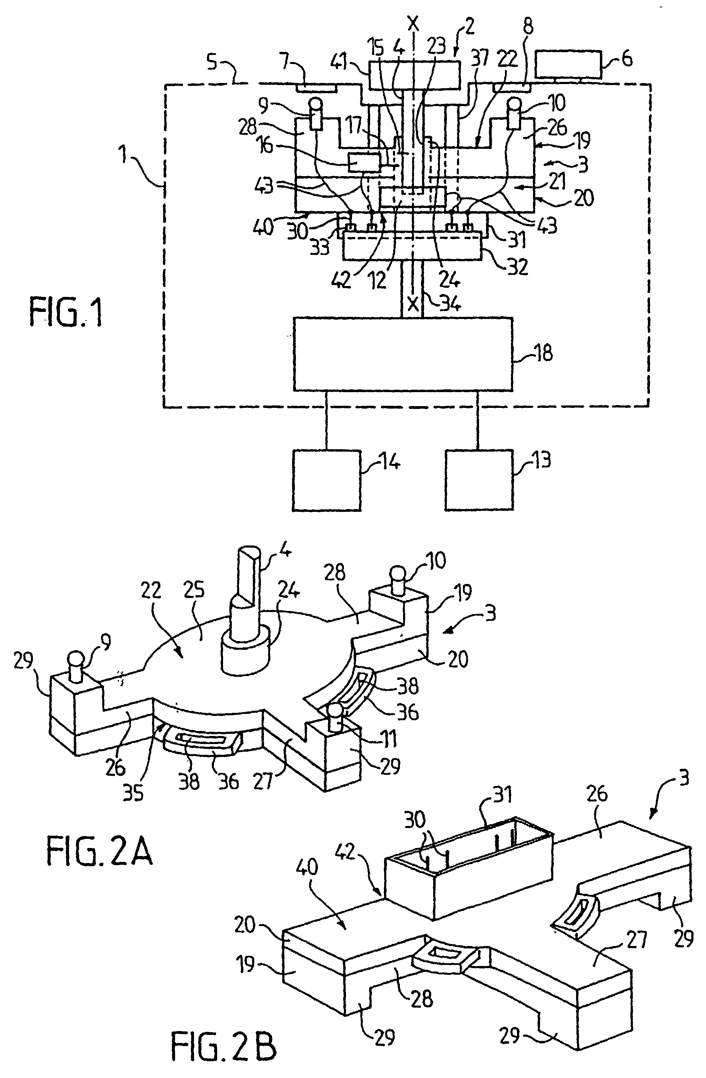

Comme illustré sur la figure 1, l'invention concerne un dispositif de commutation installé dans un tableau de commande 1 d'une installation. On considère dans ce qui suit, à titre d'exemple illustratif, que cette installation est une installation de climatisation de l'habitacle d'un véhicule automobile (non représenté sur les figures). Bien entendu, cette invention s'applique à de nombreux autres domaines, ou installations, de façon non limitative.

Dans l'exemple illustré sur la figure 1, le dispositif de commutation comprend un organe de commande 2 maintenu par un support en forme de boîtier 3 sur lequel on reviendra plus loin.

L'organe de commande 2 comprend, dans cet exemple, un actionneur 41 formant bouton, solidaire d'un arbre 4 qui s'étend selon une direction axiale X-X. Dans cet exemple, l'organe de commande 2 est de type à déplacement rotatif. Bien entendu, cet organe de commande pourrait être de type à déplacement linéaire.

Le bouton rotatif 41 fait saillie en avant d'une paroi-façade 5 du tableau de commande 1, lequel loge également d'autres organes de commande 6 destinés à gérer des composants de l'installation.

On prévoit, à proximité des actionneurs 41 des organes de commande 2 et 6, des zones 7 et 8 transparentes et munies éventuellement de marquages permettant de visualiser leurs fonctions et leur état de fonctionnement.

Pour permettre la visualisation des marquages dans la pénombre, on prévoit également des sources de lumière implantées à l'intérieur du tableau de commande et sur lesquelles on reviendra plus loin.

Dans l'exemple illustré sur la figure 1, l'arbre 4 de l'organe de commande 2 possède une extrémité connectée à un potentiomètre 12 qui permet de faire varier l'alimentation électrique d'un composant de l'installation de climatisation, comme par exemple un moteur électrique d'un ventilateur destiné à pulser de l'air à traiter en vue de sa distribution dans l'habitacle du véhicule.

Ainsi, lorsque l'on entraîne en rotation le bouton rotatif 41, on fait varier le courant délivré par le potentiomètre 12, ce qui permet de faire varier le régime du ventilateur 13.

Dans l'exemple illustré, l'organe de commande 2 peut également gérer le fonctionnement d'un autre composant de l'installation, comme par exemple le compresseur 14 du circuit de réfrigération.

Pour ce faire, on prévoit, d'une part, un contacteur électrique 15 porté par l'arbre 4 et un module de commutation 16 muni également d'un contacteur électrique 17.

Pour mettre en fonctionnement le compresseur 14 de la boucle de réfrigération de l'installation, il suffit alors de déplacer axialement l'organe de commande 2, vers l'intérieur du tableau de commande, afin que le premier contacteur électrique 15 vienne au contact du second contacteur électrique 17 du module de commutation 16. En d'autres termes, il suffit de faire passer l'organe de commande 2 d'une première position axiale vers une seconde position axiale pour faire passer le module de commutation 16 d'un premier état prédéfini à un second état prédéfini.

Le module de commutation 16 est, tout comme le potentiomètre 12, connecté à des moyens de commande 18 de l'installation, lesquels sont capables de gérer l'ensemble des composants de l'installation et notamment le compresseur 14 et le ventilateur 13. En fait, les moyens de commande 18 reçoivent des organes de commande 2 et 6 des requêtes de réglage qui peuvent être soit numériques soit analogiques, puis, à partir de ces requêtes ils règlent les différents composants de l'installation, de façon à satisfaire l'utilisateur qui a déclenché les requêtes en manipulant les organes de commande 2 et/ou 6.

On se réfère maintenant plus particulièrement aux figures 2A et 2B pour décrire le boîtier-support 3.

Dans l'exemple illustré sur les figures, le boîtier 3 est réalisé en une partie dite "supérieure" 19 et une partie dite "inférieure" 20 qui peut être solidarisée à la partie supérieure 19 grâce à des moyens appropriés (non représentés sur les figures), comme par exemple des clips. De préférence, les deux parties du boîtier 3 sont moulées dans une matière plastique isolante électriquement.

Les parties supérieure 19 et inférieure 20 sont évidées de façon à délimiter un premier emplacement ou logement 21 dans lequel se trouvent installés le module de commutation 16 et le potentiomètre 12. Plus précisément, dans l'exemple illustré, le module de commutation 16 se trouve installé dans la partie supérieure 19 du boîtier 3, tandis que le potentiomètre 12 se trouve installé dans la partie inférieure 20 de ce boîtier 3.

La partie supérieure 19 du boîtier 3 comprend au niveau d'une face supérieure 22 une ouverture 23 permettant le passage de l'arbre 4 de l'organe de commande 2. De plus, on prévoit, au moins sur la face supérieure 22 de la partie supérieure 19 du boîtier 3, une couronne de maintien 24 permettant de maintenir l'arbre 4 dans une direction sensiblement perpendiculaire à la face supérieure 22, tout en permettant le déplacement axial de l'arbre 4 selon la direction X-X.

Comme cela est illustré sur les figures 2A et 2B, le boîtier 3, et par conséquent ses parties supérieure 19 et inférieure 20, comporte une première partie 25 de forme générale, dans cet exemple, sensiblement circulaire et prolongée, sensiblement radialement et selon des directions différentes, par trois secondes parties 26 à 28 formant bras de support.

Bien entendu, lorsque l'organe de commande est de type à déplacement linéaire, la première partie 25 peut avoir une forme sensiblement rectangulaire, par exemple.

Dans l'exemple illustré, les secondes parties 26 à 26 de la partie supérieure 19 du boîtier 3 présentent chacune une saillie terminale 29 qui s'étend sensiblement axialement (parallèlement à X-X) en direction de la face arrière de la façade 5. Chaque saillie terminale 29 supporte une source de lumière 9, 10 ou 11, qui peut être par exemple une ampoule électrique, ou bien une diode. Chacune de ces sources de lumière est destinée à venir éclairer l'une des zones transparentes 7 ou 8 munies d'un éventuel marquage.

La longueur des bras 26 à 28 est par conséquent adaptée au tableau de commande 1 et plus précisément à la distance qui sépare l'organe de commande 2 des zones à éclairer. Ainsi, selon le modèle du véhicule dans lequel le tableau de commande doit être implanté, les bras pourront présenter des formes sensiblement différentes de celles illustrées. Ces bras pourront notamment ne pas être radiaux, et les écartements entre les bras 26 à 28 pourront être notablement différents de ceux représentés sur les figures 2A et 2B.

Les différentes sources de lumière 9 à 11 sont reliées dans cet exemple à des conducteurs électriques 43 qui sont eux-mêmes reliés à des bornes de contact 30 d'un connecteur 31 qui se trouve fixé en un second emplacement 42 choisi d'une face inférieure 40, opposée à la face supérieure 22, de la partie inférieure 20 du boîtier 3.

Le connecteur 31, qui, dans l'exemple illustré, est un connecteur de type mâle, est destiné à coopérer avec un second connecteur 32, de type femelle dans cet exemple, muni de broches de contact creuses 33 propres à recevoir chacune une broche de contact 30 du premier connecteur 31. Ce second connecteur 32 est relié aux moyens de commande 18, par exemple par l'intermédiaire d'une gaine électrique 34.

Afin d'immobiliser le boîtier 3 à l'intérieur du tableau de commande 1, on prévoit, par exemple sur des faces latérales 35 de la partie inférieure 20, des pattes de fixation 36 destinées à coopérer avec des bras de fixation 37 partiellement représentés sur la figure 1. Ces bras de fixation peuvent par exemple comporter en une extrémité opposée à la façade 5 du tableau de commande 1 des saillies propres à être introduites dans des ouvertures 38, adaptées à cet effet, réalisées dans les pattes de fixation 36 du boîtier 3. Ces pattes de fixation 36 sont de préférence réalisées par moulage en même temps que la partie du boîtier qui les porte.

L'assemblage d'un dispositif de commutation selon l'invention peut être réalisé comme suit.

Tout d'abord, on installe sur la face inférieure 40 de la partie inférieure 20 du boîtier 3 le premier connecteur 31 auquel le potentiomètre 12, le module de commutation 16 et les sources de lumière 9 à 11 sont reliés électriquement par des câbles 43. Puis, on loge le potentiomètre 12 et l'arbre 4 auquel il est couplé dans la partie inférieure 20 du boîtier 3. On installe ensuite le module de commutation 16 et les sources de lumière 9 à 11 dans la partie supérieure 19 du boîtier 3. On assemble alors les parties inférieure 20 et supérieure 19.

Ensuite, on fait passer l'arbre 4 au travers d'une ouverture réalisée dans la façade 5 du tableau de commande 2, puis on solidarise le boîtier 3 au tableau de commande 1 en introduisant les saillies terminales des bras de fixation 37 dans les ouvertures 38 des pattes de fixation 36 réalisées sur les faces latérales 35 du boîtier 3. On peut alors solidariser l'actionneur 41 à l'arbre 4, puis introduire partiellement le second connecteur femelle 32 dans le premier connecteur mâle 31 de façon à établir une connexion électrique entre les moyens de commande 18 et les différents éléments logés ou supportés par le boîtier 3.

L'invention ne se limite pas au mode de réalisation décrit ci-avant, mais elle englobe toutes les variantes que pourra développer l'homme de l'art dans le cadre des revendications ci-après.

Tout d'abord, la forme et le mode de réalisation du boîtier pourront être sensiblement différents de celui décrit précédemment, en référence aux figures. Ainsi, le nombre et les différentes orientations des bras destinés à supporter des sources de lumière pourront être inférieurs ou supérieurs à trois.

Ensuite, les moyens de fixation du boîtier-support au tableau de commande pourront être notablement différents de ceux décrits, pourvu qu'ils assurent une immobilisation dudit boîtier à l'intérieur du tableau de commande.

Par ailleurs, on a décrit un organe de commande de type à déplacement rotatif, mais il est clair que l'invention s'applique tout aussi bien à un organe de commande de type à déplacement linéaire, capable de commander un ou deux composants d'une installation.

De plus, le boîtier peut loger d'autres modules que ceux qui ont été décrits précédemment (module de raccordement, module de commutation et potentiomètre), ou bien ne pas contenir en même temps tous ces modules. Dans ce dernier cas, l'arbre 4 peut traverser complètement le boîtier-support de sorte que son extrémité opposée à l'actionneur (ou bouton) puisse commander le(s) module(s) placé(s) à l'extérieur du boîtier-support.

On a également décrit un organe de commande couplé à un potentiomètre pour permettre la régulation de l'alimentation d'un moteur électrique, par exemple d'un ventilateur, mais il est clair qu'à la place du potentiomètre, on pourrait prévoir un jeu de pistes conductrices couplées à des résistances de valeurs différentes installées ou non à l'intérieur de la partie inférieure du boîtier et dont les différentes pistes peuvent être connectées deux à deux par l'intermédiaire d'un frotteur porté par l'arbre de l'organe de commande. Bien entendu, d'autres composants peuvent être commandés par le dispositif selon l'invention, qu'ils soient à commande mécanique ou électrique.

Enfin, dans toute la description, on a décrit un support en forme de boîtier pour loger et supporter différents éléments, mais il est clair que le support pourrait être réalisé sous la forme d'une plaquette sur laquelle seraient éventuellement installés en des emplacements choisis les modules de commutation et/ou de régulation électrique et/ou d'autres modules, ainsi que les sources de lumière et des moyens de raccordement électrique aux moyens de commande de l'installation.

## Revendications

1. Dispositif de commutation pour tableau de commande (1) d'une installation, du type comprenant un organe de commande (2) propre à être manipulé par un utilisateur de façon à placer au moins un composant (14,13) de l'installation dans une pluralité d'états de fonctionnement prédéfinis,
**caractérisé en ce qu'**il comprend un support (3) et comportant des moyens de maintien (24) dudit organe de commande (2), des moyens de support (26-29) d'au moins une source de lumière (9-11) destinée à éclairer une zone choisie (7,8) d'une face arrière d'une paroi-façade (5) du tableau de commande (1), et un premier emplacement (21) pour loger une partie (43) au moins de moyens de raccordement électrique (43,31) aux moyens de commande (18) d'au moins ladite source de lumière (9-11).

2. Dispositif de commutation selon la revendication 1, **caractérisé en ce que** le support (3) comporte sur une face dite "inférieure" (32) du support (3) un second emplacement (42) pour loger un connecteur (31) que comprennent les moyens de raccordement (43,31) et propre à coopérer avec un connecteur complémentaire (32) des moyens de commande (18), et **en ce que** lesdits moyens de support (26-29) de la source de lumière (9-11) sont situés sur une face dite "supérieure" (22) dudit support (3), opposée à la face inférieure (40).

3. Dispositif de commutation selon l'une des revendications 1 et 2, **caractérisé en ce que** le support (3) comprend de premiers moyens de fixation (36) propres à coopérer avec de second moyens de fixation (37) logés dans le tableau de commande (1), de façon à permettre sa solidarisation audit tableau de commande (1).

4. Dispositif de commutation selon l'une des revendications 1 à 3, **caractérisé en ce que** l'organe de commande (2) comprend, d'une part, un arbre (4) maintenu par lesdits moyens de maintien (24) du support (3), la position dudit arbre relativement audit support définissant l'état de fonctionnement en cours du composant (14,13) de l'installation, et d'autre part, un actionneur (41) solidaire de l'arbre (4) et faisant saillie sur une face avant de la paroi-façade (5) du tableau de commande (1) de façon à permettre le déplacement dudit arbre par ledit utilisateur.

5. Dispositif de commutation selon l'une des revendications 1 à 4, **caractérisé en ce que** le premier emplacement (21) du support (3) est agencé pour loger des moyens de réglage (12) propres à être placés par ledit organe de commande (2) dans une pluralité d'états prédéfinis de façon à définir ladite multiplicité d'états de fonctionnement prédéfinis dudit composant (13) de l'installation.

6. Dispositif de commutation selon l'une des revendications 1 à 5, **caractérisé en ce que** ledit composant est un moteur électrique d'un ventilateur (13) d'une installation de chauffage, ventilation et/ou climatisation de véhicule automobile.

7. Dispositif de commutation selon l'une des revendications 1 à 6, **caractérisé en ce que** l'organe de commande (2) est également propre à permettre le placement d'un autre composant (14) de l'installation dans au moins deux états de fonctionnement prédéfinis.

8. Dispositif de commutation selon la revendication 7, **caractérisé en ce que** le premier emplacement (21) du support (3) est agencé pour loger des moyens de commutation (16) propres à être placés par ledit organe de commande (2) dans au moins deux états prédéfinis de façon à définir lesdits au moins deux états de fonctionnement prédéfinis de l'autre composant (14) de l'installation.

9. Dispositif de commutation selon la revendication 4 en combinaison avec la revendication 8, **caractérisé en ce que** l'arbre (4) de l'organe de commande (2) est propre à se déplacer axialement entre au moins de première et seconds positions de façon à placer lesdits moyens de commutation (16) dans l'un de leurs aux moins deux états prédéfinis associés respectivement auxdits au moins deux états de fonctionnement prédéfinis de l'autre composant (14).

10. Dispositif de commutation selon l'une des revendications 7 à 9, **caractérisé en ce que** l'autre composant (14) est un compresseur du circuit de réfrigération de l'installation, propre à prendre de premier et second états de fonctionnement dans lesquels il est respectivement en fonctionnement et hors fonctionnement.

11. Dispositif de commutation selon l'une des revendications précédentes, **caractérisé en ce que** le support (3) comprend une première partie (25) qui comporte les moyens de maintien (24) de l'organe de commande (2), et au moins une seconde partie (26) qui prolonge ladite première partie (25) et comporte lesdits moyens de support (26-29) de la source de lumière (9-11), lesdites première (25) et seconde (26) parties délimitant au moins ledit premier emplacement (21).

12. Dispositif de commutation selon la revendication 11, **caractérisé en ce que** le support (3) comporte au moins deux secondes parties (26-28) qui prolongent chacune la première partie (25) dans des directions différentes et comportant chacune des moyens de support (29) d'une source de lumière (9-11), de façon à permettre l'éclairement d'au moins deux zones choisies (7,8), distinctes, de la face arrière de la paroi-façade (5) du tableau de commande (1).

13. Dispositif de commutation selon l'une des revendications précédentes, **caractérisé en ce que** l'organe de commande (2) est de type à déplacement rotatif.

14. Dispositif de commutation selon l'une des revendications 1 à 12, **caractérisé en ce que** l'organe de commande (2) est de type à déplacement linéaire.

15. Dispositif de commutation selon l'une des revendications 11 à 14, **caractérisé en ce que** les première (25) et seconde(s) (26-28) parties du support (3) sont réalisées en un unique boîtier moulé qui délimite dans une partie interne creuse ledit premier emplacement (21).

16. Dispositif de commutation selon la revendication 15, **caractérisé en ce que** ledit boîtier (3) est réalisé dans une matière plastique.

17. Dispositif de commutation selon l'une des revendications 15-et 16, **caractérisé en ce que** ledit boîtier (3) est réalisé en une partie supérieure (19) et une partie inférieure (20) propres à être assemblées l'une à l'autre de façon à délimiter ledit premier emplacement (21), lesdites parties supérieure (19) et inférieure (20) comportant respectivement les faces supérieure (22) et inférieure (40).

## Patentansprüche

1. Umschalteinrichtung für ein Steuerpaneel (1) einer Anlage vom Typ, umfassend eine Steuereinrichtung (2), die von einem Benutzer in solch einer Weise gehandhabt werden kann, dass zumindest ein Bauteil (14, 13) der Anlage in eine Vielzahl von vorbestimmten Funktionszuständen versetzt werden kann, **dadurch gekennzeichnet, dass** eine Stützeinrichtung (3) vorgesehen ist, umfassend eine Halteeinrichtung (24) der Steuereinrichtung (2), eine Stützeinrichtung (26-29) von zumindest einer Lichtquelle (9-11), bestimmt zur Beleuchtung einer gewählten Zone (7, 8) einer hinteren Fläche einer Fassadenwandung (5) des Steuerpaneels (1), sowie einen ersten Bauraum bzw. Ort (21) zur Aufnahme von zumindest einem Teil (43) einer elektrischen Anschlusseinrichtung (43, 31) der zumindest einen Lichtquelle (9-11) bezüglich der Steuereinrichtung (18).

2. Umschalteinrichtung nach Anspruch 1, **dadurch gekennzeichnet, dass** die Stützeinrichtung an einer "unteren" Fläche (32) der Stützeinrichtung (3) einen zweiten Ort (42) umfasst zum Aufnehmen eines Verbinders (31), den die Anschlusseinrichtung (43, 31) umfasst und der geeignet ist zur Wechselwirkung mit einem komplementären Verbinder (32) der Steuereinrichtung (18), und dass die Stützeinrichtung (26, 29) der Lichtquelle (9-11) sich an einer "oberen" Fläche (22) der Stützeinrichtung (3) befindet, gegenüberstehend der unteren Fläche (40).

3. Umschalteinrichtung nach einem der Ansprüche 1 und 2, **dadurch gekennzeichnet, dass** die Stützeinrichtung (3) eine erste Befestigungseinrichtung (36) umfasst, geeignet zur Wechselwirkung mit einer zweiten Befestigungseinrichtung (37), aufgenommen in dem Steuerpaneel (1), um dessen Befestigung an dem Steuerpaneel (1) zu ermöglichen.

4. Umschalteinrichtung nach einem der Ansprüche 1 bis 3, **dadurch gekennzeichnet, dass** die Steuereinrichtung (2) umfasst einerseits eine Welle (4), gehalten von der Halteeinrichtung (24) der Stützeinrichtung (3), wobei die Position der Welle bezüglich der Stützeinrichtung den aktuellen Funktions- oder Betriebszustand des Bauteils (14, 13) der Anlage bestimmt, sowie andererseits einen Betätiger (41), verbunden mit der Welle (4) und vorspringend an einer vorderen Fläche der Fassadenwandung (5) des Steuerpaneels (1), so dass eine Versetzung der Welle durch den Benutzer ermöglicht ist.

5. Umschalteinrichtung nach einem der Ansprüche 1 bis 4, **dadurch gekennzeichnet, dass** der erste Ort (21) der Stützeinrichtung (3) ausgebildet ist zur Aufnahme einer Regeloder Einstelleinrichtung (12), geeignet, um von der Steuereinrichtung (2) in eine Vielzahl von vorbestimmten Zuständen versetzt zu werden, so dass die Vielzahl an vorbestimmten Funktions- oder Betriebszuständen des Bauteiles (13) der Anlage definiert sind oder werden.

6. Umschalteinrichtung nach einem der Ansprüche 1 bis 5, **dadurch gekennzeichnet, dass** das Bauteil ein Elektromotor eines Gebläses (13) einer Heiz-, Belüftungs- und/oder Klimaanlage eines Kraftfahrzeugs ist.

7. Umschalteinrichtung nach einem der Ansprüche 1 bis 6, **dadurch gekennzeichnet, dass** die Steuereinrichtung (2) ebenfalls geeignet ist, das Versetzen eines weiteren Bauteils (14) der Anlage in zumindest zwei vorbestimmte Funktions- oder Betriebszustände zu ermöglichen.

8. Umschalteinrichtung nach Anspruch 7, **dadurch gekennzeichnet, dass** der erste Ort (21) der Stützeinrichtung (3) ausgebildet ist zur Aufnahme von Umschaltmitteln (16), geeignet, um von der Steuereinrichtung (2) versetzt zu werden in zumindest zwei vorbestimmte Zustände, so dass die zumindest zwei vorbestimmten Funktions- oder Betriebszustände des weiteren Bauteiles (14) der Anlage definiert sind bzw. werden.

9. Umschalteinrichtung nach Anspruch 4, wenn abhängig von Anspruch 8, **dadurch gekennzeichnet, dass** die Welle (4) der Steuereinrichtung (2) geeignet ist, axial versetzt zu werden zwischen zumindest ersten und zweiten Positionen, so dass die Umschaltmittel (16) in einen ihrer zumindest zwei vorbestimmten Zustände versetzt sind oder werden, jeweils zugeordnet den zumindest zwei vorbestimmten Funktions- oder Betriebszuständen des anderen Bauteiles bzw. weiteren Bauteiles (14).

10. Umschalteinrichtung nach einem der Ansprüche 7 bis 9, **dadurch gekennzeichnet, dass** das weitere Bauteil (14) ein Kompressor des Kältekreises der Anlage ist, geeignet, erste und zweite Funktions- oder Betriebszustände einzunehmen, wobei jeweils ein Betrieb oder ein Nichtbetrieb vorliegt.

11. Umschalteinrichtung nach einem der vorangegangenen Ansprüche, **dadurch gekennzeichnet, dass** die Stützeinrichtung (3) einen ersten Teil (25) aufweist, umfassend die Halteeinrichtung (24) der Steuereinrichtung (2), sowie zumindest einen zweiten Teil (26), der den ersten Teil (25) fortsetzt oder verlängert, und die Stützeinrichtung (26-29) der Lichtquelle (9-11) umfasst, wobei die ersten und zweiten Teile (25, 26) zumindest den ersten Raum (21) begrenzen.

12. Umschalteinrichtung nach Anspruch 11, **dadurch gekennzeichnet, dass** die Stützeinrichtung (3) zumindest zwei zweite Teile (26-28) umfasst, die jeweils den ersten Teil (25) in unterschiedlichen Richtungen fortsetzen und jeweils eine Stützeinrichtung (29) einer Lichtquelle (9-11) umfassen, so dass die Beleuchtung von zumindest zwei gewählten distinkten Zonen (7, 8) der hinteren Fläche der Fassadenwandung (5) des Steuerpaneels (1) ermöglicht ist.

13. Umschalteinrichtung nach einem der vorangegangenen Ansprüche, **dadurch gekennzeichnet, dass** die Steuereinrichtung (2) vom Typ mit Rotationsversetzung bzw. vom drehbaren Typ ist.

14. Umschalteinrichtung nach einem der Ansprüche 1 bis 12, **dadurch gekennzeichnet, dass** die Steuereinrichtung (2) vom Linearversetzungstyp ist.

15. Umschalteinrichtung nach einem der Ansprüche 11 bis 14, **dadurch gekennzeichnet, dass** der erste (25) und der (die) zweite(n) (26-28) Teil(e) der Stützeinrichtung (3) dargestellt sind als ein einzelnes geformtes oder gegossenes Gehäuse, welches in einem inneren, hohlen Teil den ersten Ort (21) begrenzt.

16. Umschalteinrichtung nach Anspruch 15, **dadurch gekennzeichnet, dass** das Gehäuse (3) aus Kunststoffmaterial hergestellt ist.

17. Umschalteinrichtung nach einem der Ansprüche 15 und 16, **dadurch gekennzeichnet, dass** das Gehäuse (3) dargestellt ist aus einem oberen Teil (19) und einem unteren Teil (20), geeignet, um mit Bezug zueinander in solch einer Weise zusammengebaut zu werden, dass der erste Ort (21) begrenzt wird, wobei die oberen und unteren Teile (19, 20) jeweils die oberen und unteren Flächen (22, 40) aufweisen.

## Claims

1. Switching device for a control panel (1) for an installation, of the type comprising a control member (2) able to be manipulated by a user so as to put at least one component (14, 13) of the installation in a plurality of predefined operating states,
**characterised in that** it comprises a support (3) and having means of holding (24) the said control member (2), support means (26-29) for at least one light source (9-11) intended to illuminate a chosen area (7, 8) of a rear face of a front wall (5) of the control panel (1), and a first location (21) for housing at least part (43) of electrical connection means (43, 31) to the control means (18) for at least the said light source (9-11).

2. Switching device according to Claim 1, **characterised in that** the support (3) has, on a so-called "bottom" face (32) of the support (3), a second location (42) for housing a connector (31) which the connection means (43, 31) have and able to cooperate with a complementary connector (32) for the control means (18), and **in that** the said support means (26-29) for the light source (9-11) are situated on a so-called "top" face (22) of the said support (3), opposite to the bottom face (40).

3. Switching device according to one of Claims 1 and 2, **characterised in that** the support (3) comprises first fixing means (36) able to cooperate with second fixing means (37) housed in the control panel (1), to enable it to be fixed to the said control panel (1).

4. Switching device according to one of Claims 1 to 3, **characterised in that** the control member (2) comprises on the one hand a shaft (4) held by the said holding means (24) for the support (3), the position of the said shaft relative to the said support defining the current state of operation of the component (14, 13) of the installation, and on the other hand an actuator (41) secured to the shaft (4) and projecting on a front face of the front wall (5) of the control panel (1) so as to enable the said shaft to be moved by the said user.

5. Switching device according to one of Claims 1 to 4, **characterised in that** the first location (21) of the support (3) is arranged to house adjustment means (12) able to be put by the said control member (2) in a plurality of predefined states so as to define the said multiplicity of predefined operating states of the said component (13) of the installation.

6. Switching device according to one of Claims 1 to 5, **characterised in that** the said component is an electric motor for a fan (13) in a heating, ventilation and/or air conditioning installation for a motor vehicle.

7. Switching device according to one of Claims 1 to 6, **characterised in that** the control member (2) is also able to allow the putting of another component (14) of the installation in at least two predefined operating states.

8. Switching device according to Claim 7, **characterised in that** the first location (21) of the support (3) is arranged to house switching means (16) able to be put by the said control member (2) in at least two predefined states so as to define the said at least two predefined operating states of the other component (14) of the installation.

9. Switching device according to Claim 4 in combination with Claim 8, **characterised in that** the shaft (4) of the control member (2) is able to move axially between at least first and second positions so as to put the said switching means (16) in one of their at least two predefined states associated respectively with the said at least two predefined operating states of the other component (14).

10. Switching device according to one of Claims 7 to 9, **characterised in that** the other component (14) is a compressor in the refrigeration circuit of the installation, able to take the first and second operating states in which it is respectively in operation and out of operation.

11. Switching device according to one of the preceding claims, **characterised in that** the support (3) comprises a first part (25) which includes the means (24) of holding the control member (2), and at least a second part (26) which extends said first part (25) and includes the said support means (26-29) for the light source (9-11), the said first (25) and second (26) parts delimiting at least the said first location (21).

12. Switching device according to Claim 11, **characterised in that** the support (3) has at least two second parts (26-28) which each extend the first part (25) in different directions and each have support means (29) for a light source (9-11), so as to allow the illumination of at least two distinct chosen areas (7, 8) of the rear face of the front wall (5) of the control panel (1).

13. Switching device according to one of the preceding claims, **characterised in that** the control member (2) is of the rotary movement type.

14. Switching device according to one of Claims 1 to 12, **characterised in that** the control member (2) is of the linear movement type.

15. Switching device according to one of Claims 11 to 14, **characterised in that** the first (25) and second (26-28) parts of the support (3) are produced as a single moulded casing which delimits, in a hollow internal part, the said first location (21).

16. Switching device according to Claim 15, **characterised in that** the said casing (3) is produced from a plastics material.

17. Switching device according to one of Claims 15 and 16, **characterised in that** the said casing (3) is produced as a top part (19) and a bottom part (20) able to be connected to each other so as to delimit the said first location (21), the said top (19) and bottom (20) parts including respectively the top (22) and bottom (40) faces.
